## Europäisches Patentamt

## European Patent Office

## Office européen des brevets

(19)

(11) Publication number: **0 204 190**
**B1**

(12)

# EUROPEAN PATENT SPECIFICATION

(45) Date of publication of the patent specification:
08.03.89

(51) Int. Cl.⁴: **F16D 21/00, F25B 27/00**

(21) Application number: **86106611.6**

(22) Date of filing: **15.05.86**

---

(54) Drive arrangement for compressor of a transport refrigeration unit.

---

(30) Priority: **04.06.85 US 741093**

(43) Date of publication of application:
**10.12.86 Bulletin 86/50**

(45) Publication of the grant of the patent:
**08.03.89 Bulletin 89/10**

(84) Designated Contracting States:
**DE FR GB IT**

(56) References cited:
**DE-A- 1 476 990**
**DE-A- 1 950 316**
**DE-A- 3 234 106**
**FR-A- 2 434 961**
**FR-A- 2 450 382**
**US-A- 4 450 942**

(73) Proprietor: **THERMO KING CORPORATION,**
**314 West 90th Street, Minneapolis Minnesota 55420(US)**

(72) Inventor: **Mayer, Donald Keith, 8667 Rich Road,**
**Bloomington Minnesota 55437(US)**

(74) Representative: **Modiano, Guido et al, MODIANO, JOSIF,**
**PISANTY & STAUB Modiano & Associati Via**
**Meravigli, 16, I-20123 Milan(IT)**

---

ACTORUM AG

## Description

This invention relates generally to drive arrangements for compressors of transport refrigeration units and, more particularly, to a drive arrangement for a compressor to be driven alternatively by an internal combustion engine or, an electric motor.

One conventional arrangement DE-A 3 234 106 for providing either internal combustion drive or electric motor drive for a refrigerant compressor of a transport refrigeration unit includes an internal combustion engine, such as a diesel engine, driving the compressor through a centrifugal clutch typically connected to the engine flywheel and a belt extending to the compressor, and an electric motor which can also drive the compressor through a belt when the engine is not running and the clutch is disengaged. The engine-mounted clutch experiences rapid wear and premature deterioration in many cases, particularly in connection with small diesel engines, due principally to the intense torsional oscillation that is characteristic of such engines.

It is the principal object of the invention to provide a belt drive and clutch arrangement intended to reduce the deterioration of the clutch resulting from engine torsional oscillations, and thus to extend the useful life of the clutch.

In accordance with the invention, for a transport refrigeration unit in which a refrigerant compressor is selectively belt-drivable either from an internal combustion engine output through a clutch or from an electric motor output, a driving arrangement for the compressor is provided comprising a rigid pulley on the engine output and a rigid pulley on the motor output, and a clutch having two separate pulleys including a first pulley directly supported from the compressor housing through bearing means having an inner race stationarily attached to the housing, the first clutch pulley being connected to be driven through belt means from the engine pulley, and a second clutch pulley directly attached to the shaft of the compressor and being connected to be driven through belt means from the motor pulley, and further including means selectively operable in accordance with engine operation and non-operation to effect engagement and disengagement, respectively, of the clutch.

A preferred embodiment of the invention will now be described, by way of example only, with reference to the accompanying drawings, in which:

Figure 1 is a somewhat schematic view of a typical prior art arrangement in which a clutch is associated with the internal combustion engine;

Figure 2 is a sectional view of a conventional prior art clutch mounted on an engine;

Figure 3 is a somewhat schematic view of the belt drive and clutch arrangement of the invention;

Figure 4 is a fragmentary sectional view of a centrifugal clutch mounted on a compressor; and

Figure 5 is a fragmentary sectional view of an electric clutch which may be used in accordance with the principles of the invention.

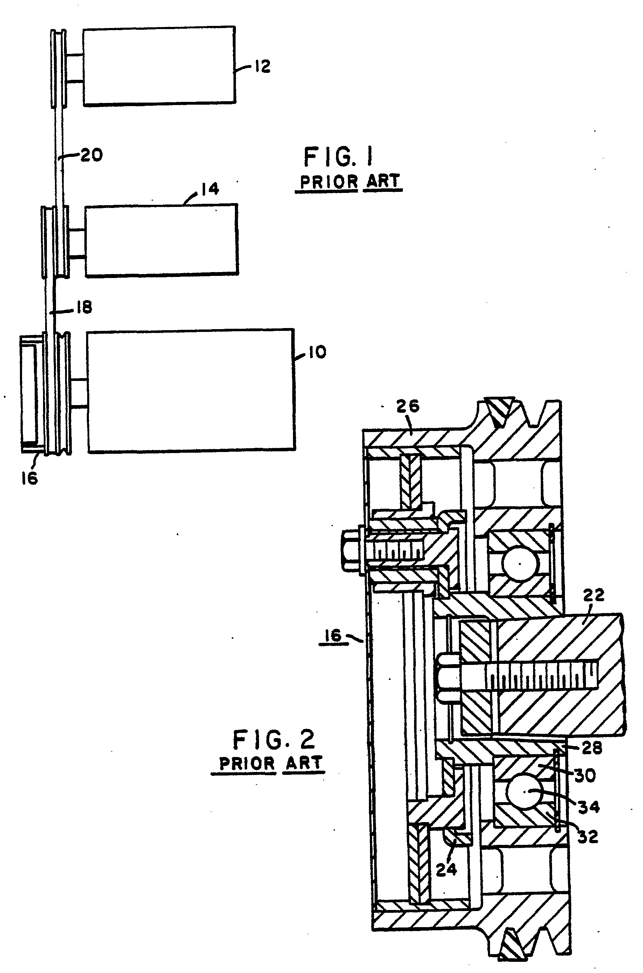

Referring first to Figure 1, the conventional arrangement shown therein enables a compressor 14 of a transport refrigeration unit to be driven either from an engine 10 or from an electric motor 12. When the engine is operating, its output is transmitted through a clutch 16 and a belt 18 to drive the compressor 14. When the engine is not running, the clutch 16 is disengaged to enable the compressor 14 to be driven directly from the motor 12 through belt 20 while the clutch drum free-wheels.

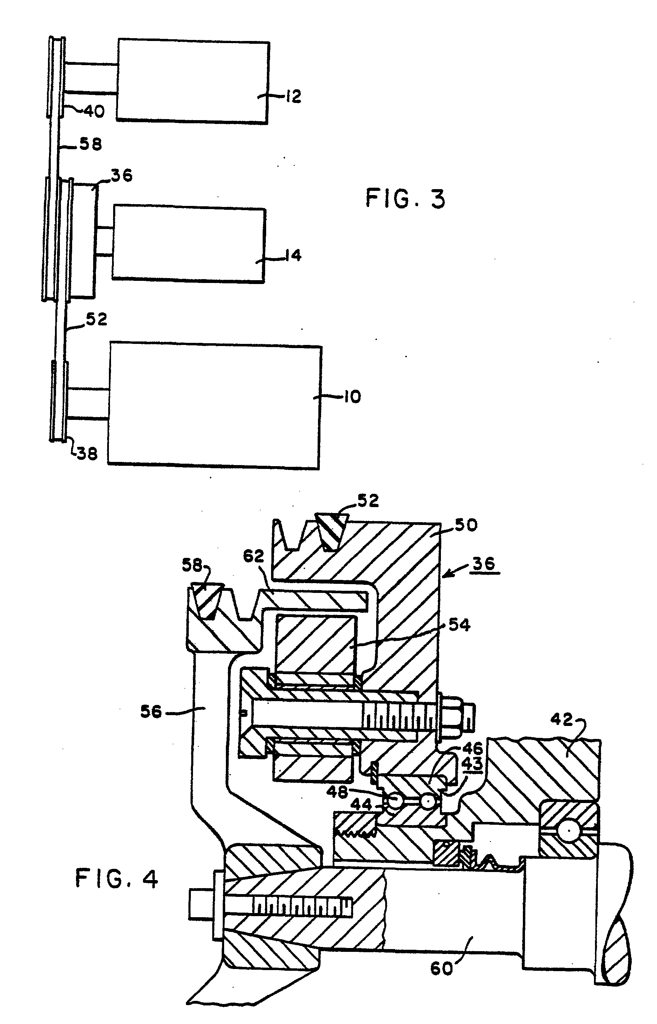

In Figure 2, details of a typical centrifugal clutch driven by the engine output 22 are shown. The clutch shoe carrier part 24 of the clutch is driven by the engine output 22 to which it is directly attached. The drum part 26 of the clutch is supported from the hub 28 through bearing means which include an inner race 30, an outer race 32, and ball bearings 34.

With the engine-mounted clutch of Figure 2, when the clutch is engaged during engine operation, both the inner and outer bearing races 30 and 32 are rotating with no relative rotation therebetween. Since both bearing races rotate at the same rate, the individual balls within the bearing do not rotate. The combined vibration and torsional oscillation of the engine, and hypocyclic bearing slip, generate a hostile environment resulting in friction oxidation or frettage corrosion of the essentially motionless bearing balls and adjoining races.

In accordance with the invention, as shown in Figure 3, a clutch 36 is compressor-mounted, a rigid pulley 38 is engine-mounted, and a rigid pulley 40 is mounted on the output shaft of the electric motor.

A centrifugal clutch 36 in its mounting arrangement relative to the compressor is shown in Figure 4. The stationary compressor seal plate 42 supports a bearing assembly including an inner race 44, an outer race 46, and intervening ball bearings 48, the bearing means in turn supporting the first pulley 50 which is connected through belt means 52 to be driven from the engine. The pulley 50 carries the conventional centrifugally movable shoes 54 which move radially outwardly when the pulley 50 rotates at or above a given speed.

The centrifugal clutch of Figure 4 also includes a second clutch pulley 56 which is adapted to be driven from the electric motor 12 through belt 58 and is directly attached to the compressor shaft 60, and which pulley 56 includes a drum part 62 which is contacted by the shoes 54 when the clutch is in an engaged condition.

When the engine 10 is operating, the first pulley 50 is rotating and the shoes 54 engage the drum 62 of the second pulley which, in turn, drives the compressor through the shaft 60. Under this condition, the bearing inner race 44 is stationary while the outer race is rotating and relative rotation of the bearing balls 48 takes place.

Alternatively, when the engine is not operating, the pulley 50 is stationary and the pulley 56 rotates to drive the compressor from the motor 12. In this situation, both the inner and outer races of the bearing and the intervening balls 48 are stationary.

The compressor-mounted clutch 36 also benefits from the torsional shock isolation provided by the resilient belt 52 between the engine 10 and the compressor 14. A substantial portion of the torsional oscillation and vibration experienced by the engine-mounted clutch of the prior art in Figure 1 is absorbed in the novel arrangement through the belt 52 before reaching the compressor-mounted clutch. The shoes 54 in the compressor-mounted clutch also enjoy further isolation from engine torque oscillation by the flywheel inertia of the engine-driven-shoe-carrier pulley 50.

An incidental benefit for the crankshaft bearing of the engine 10 is derived from the fact that only a lightweight pulley 38 need be added to the flywheel, thus reducing the weight on the engine flywheel.

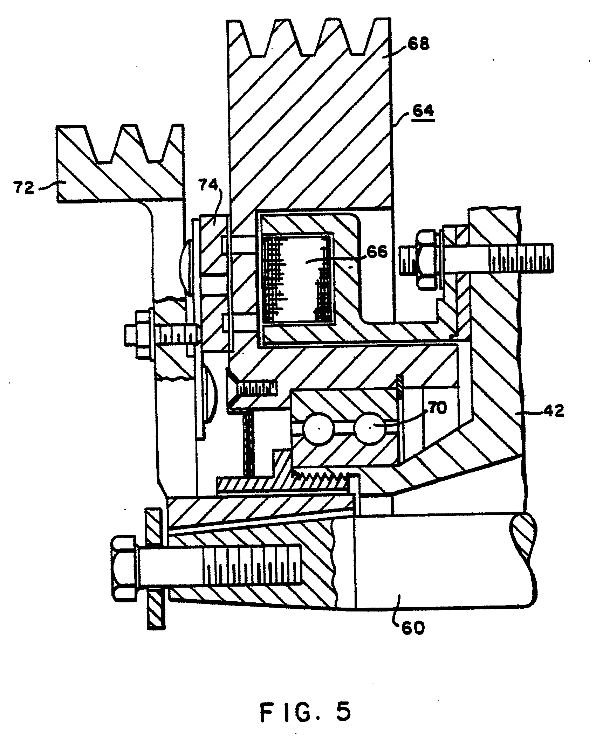

The benefits of the invention are also available when employing an electrically operated clutch 64, as shown in Figure 5. The electric clutch itself is conventional and includes a field coil 66 which is stationary and mounted to the compressor body 42, and which fits in a recess of the engine rotatable first pulley 68 which is rotatably supported from the compressor body 42 through the bearing assembly 70. The motor driven pulley 72 is fixedly attached to the compressor shaft 60 and carries the spring attached armature 74 which is adapted to be drawn toward the field coil 66 when the coil is energized, to lock the pulleys 68 and 72 together.

The same advantage with respect to the bearings 70, and other advantages mentioned in connection with the centrifugal clutch, are available with the electric clutch.

## Claims

1. A driving arrangement for a refrigerant compressor (14) of a transport refrigeration unit, said driving arrangement comprising an internal combustion engine (10), an electric motor (12) having an output shaft with a motor pulley (40) thereon, and a clutch (16) enabling the refrigerant compressor (14) to be selectively driven either from the electric motor (12) or from the internal combustion engine (10), characterized in that said clutch (36 or 64) includes two separate clutch pulleys (50, 56 or 68, 72), a first one (50 or 68) of which is supported from a housing portion (42) of the compressor (14) and is connected to be belt-driven from the internal combustion engine (10), and a second one (56 or 72) of which clutch pulleys is rigidly mounted on the compressor shaft (60) and is connected to be belt-driven from said motor pulley (40), the arrangement being such that said first clutch pulley (50 or 68) is stationary when the compressor is driven from the electric motor, and said first and second clutch pulleys both rotate together when the compressor is driven from the internal combustion engine.

2. A driving arrangement according to claim 1, characterized in that said clutch (36) is a centrifugal clutch comprising a clutch drum (62) disposed on said second clutch pulley (56), and centrifugally movable clutch shoes (54) mounted on said first clutch pulley (50), said clutch shoes being adapted to move into and from driving engagement with the clutch drum when the internal combustion engine (10) is accelerating above or decelerating below, respectively, a predetermined speed.

3. A driving arrangement according to claim 1, characterized in that said clutch (64) is an electrically operable clutch comprising a magnetic armature (74) and an electrically energizeable field coil (66) for operating the armature, the arrangement being such that the armature locks said first and second clutch pulleys (68, 72) together when the field coil is switched from one of two states of energization thereof to the other.

4. A driving arrangement according to claim 1, 2 or 3, characterized in that said first clutch pulley (50 or 68) is supported from said housing portion (42) through an anti-friction bearing (43 or 70).

## Patentansprüche

1. Antriebsanordnung für den Kühlkompressor (14) des Kühlaggregates von Kühltransportern bestehend aus einer Verbrennungskraftmaschine (10), einem Elektromotor (12) mit einer Antriebswelle mit einer darauf befindlichen Antriebsriemenscheibe (40), und einer Schaltkupplung (16), welche es ermöglicht, den Kühlkompressor (14) selektiv entweder vom Elektromotor (12) oder von der Verbrennungskraftmaschine (10) aus anzutreiben, dadurch gekennzeichnet, daß die Schaltkupplung (36 oder 64) zwei getrennte Kupplungsscheiben (50, 56 oder 68, 72) aufweist, von denen eine erste (50 oder 68) an einem Gehäuseteil (42) des Kompressors (14) gelagert und zum Riemenantrieb von der Verbrennungskraftmaschine (10) aus angeschlossen ist, und von denen eine zweite (56 oder 72) starr auf der Kompressorwelle (60) montiert und zum Riemenantrieb von der Antriebsriemenscheibe (40) aus angeschlossen ist, wobei die Anordnung derart ist, daß die erste Kupplungsscheibe (50 oder 68) stationär ist, wenn der Kompressor vom Elektromotor angetrieben wird und sich die erste und die zweite Kupplungsscheibe zusammen drehen, wenn der Kompressor von der Verbrennungskraftmaschine angetrieben wird.

2. Antriebsanordnung nach Anspruch 1, dadurch gekennzeichnet, daß die Kupplung (36) eine Zentrifugalkupplung ist, welche eine Kupplungstrommel (62), die auf der zweiten Kupplungsscheibe (56) angeordnet ist, und zentrifugal bewegbare Kupplungsbacken (54), die auf der ersten Kupplungsscheibe (50) montiert sind, aufweist, wobei die Kupplungsbacken befähigt sind, sich in Antriebseingriff und aus dem Eingriff mit der Kupplungstrommel zu bewegen, wenn die Verbrennungskraftmaschine (10) über eine vorbestimmte Geschwindigkeit beschleunigt bzw. unter dieselbe verlangsamt wird.

3. Antriebsanordnung nach Anspruch 1, dadurch gekennzeichnet, daß die Kupplung (64) eine elektrisch betätigbare Kupplung ist, welche einen Magnetanker (74) und eine elektrisch erregbare Feldspule (66) zur Betätigung des Ankers aufweist, wobei die Anordnung derart ist, daß der Anker die erste und die zweite Riemenscheibe (68, 72) miteinander verriegelt, wenn die Feldspule von einem ihrer beiden Erregungszuständen und den anderen umgeschaltet wird.

4. Antriebsanordnung nach Anspruch 1, 2 oder 3, dadurch gekennzeichnet, daß die erste Riemenscheibe (50 oder 68) am genannten Gehäuseteil (42) über ein Wälzlager (43 oder 70) gelagert ist.

**Revendications**

1. Dispositif d'entraînement pour un compresseur frigorifique (14) d'une unité de transport frigorifique, ledit dispositif d'entraînement comprenant un moteur (10) à combustion interne, un moteur électrique (12) ayant un arbre de sortie avec une poulie motrice (40) sur cet arbre, et un embrayage (16), permettant au compresseur frigorifique (14) d'être entraîné de façon sélective, soit par le moteur électrique (12), soit par le moteur (10) à combustion interne, caractérisé par le fait que ledit embrayage (36 ou 64) comporte deux poulies d'embrayage séparées (50, 56 ou 68, 72), la première (50 ou 68) d'entre elles étant supportée par un carter (42) du compresseur (14), et connectée pour être entraînée par courroie par le moteur (10) à combustion interne et une seconde poulie (56 ou 72) des poulies d'embrayage, montée de façon fixe sur l'arbre (60) du compresseur et connectée pour être entraînée par courroie par ladite poulie motrice (40), le dispositif étant tel que la dite première poulie (50 ou 68) d'embrayage est stationnaire quand le compresseur est entraîné par le moteur électrique, et que lesdites première et seconde poulies d'embrayage tournent toutes les deux ensemble quand le compresseur est entraîné par le moteur à combustion interne.

2. Dispositif d'entraînement selon la revendication 1, caractérisé par le fait que ledit embrayage (36) est un embrayage centrifuge, comprenant un tambour (62) d'embrayage disposé sur ladite seconde poulie (56) d'embrayage, et des patins (54) d'embrayage mobiles de façon centrifuge, montés sur ladite première poulie (50) d'embrayage, lesdits patins (54) d'embrayage étant adaptés pour se déplacer dans un contact d'entraînement avec le tambour d'embrayage et pour se séparer de celui-ci, quand le moteur (10) à combustion interne accélère au-dessus, ou décélère en-dessous, respectivement, d'une vitesse prédéterminée.

3. Dispositif d'entraînement selon la revendication 1, caractérisé par le fait que ledit embrayage (64) est un embrayage manœuvrable électriquement, comprenant une armature magnétique (74) et une bobine (66) à champ magnétique pouvant être excitée électriquement pour faire fonctionner l'armature, le dispositif étant tel que l'armature verrouille ensemble lesdites première et seconde poulies (68, 72) d'embrayage quand la bobine à champ magnétique est commutée de l'un des deux états d'excitation de ces poulies à l'autre.

4. Dispositif selon les revendications 1, 2 ou 3, caractérisé par le fait que ladite première poulie (50 ou 68) d'embrayage est supportée par ledit carter (42) par l'intermédiaire d'un palier anti-friction (43 ou 70).

FIG. 1
PRIOR ART

FIG. 2
PRIOR ART

EP 0 204 190 B1

FIG. 3

FIG. 4

FIG. 5